# EUROPÄISCHE PATENTSCHRIFT

(11) **EP 2 041 460 B1**
(45) Veröffentlichungstag und Bekanntmachung des Hinweises auf die Patenterteilung: **16.01.2013**
(21) Anmeldenummer: 07703143.3
(22) Anmeldetag: 30.01.2007
(51) Int. Cl.: F16J 15/06, F16J 15/12, F02F 11/00

(54) **TRÄGERRAHMENDICHTUNG MIT VERRINGERTEM GEWICHT**
CARRIER FRAME SEAL OF REDUCED WEIGHT
JOINT D'ETANCHEITE A CADRE SUPPORT DE POIDS REDUIT

(30) Priorität: 03.05.2006 DE 102006020539
(43) Veröffentlichungstag der Anmeldung: 01.04.2009
(73) Patentinhaber: Federal-Mogul Sealing Systems Bretten GmbH, 75015 Bretten (DE)
(72) Erfinder: SALAMEH, Ralf, 75053 Gondelsheim (DE)
(74) Vertreter: Kurig, Thomas
(86) Internationale Anmeldenummer: PCT/EP2007/000789
(87) Internationale Veröffentlichungsnummer: WO 2007/124793

(56) Entgegenhaltungen:
- EP-A- 0 281 228
- WO-A-2005/121611
- DE-A1- 3 831 414
- DE-C1- 4 427 168
- US-A- 4 997 193
- EUGENE I. RIVIN: "Stiffness and Damping in Mechanical Design" 1999, MARCEL DEKKER, INC. , NEW YORK , XP002515278 Chapter 2.5: Stiffness of Frame/Bed Components Abbildung 2.21
- FALK, A., BARTHOLD F.J., STEIN, E.: "A hierarchical design concept for shape optimization based on the interaction of CAGD and FEM" STRUCTURAL OPTIMIZATION, Bd. 18, Nr. 1, 1999, Seiten 12-23, XP002515277

## Beschreibung

Die vorliegende Erfindung betrifft Trägerrahmendichtungen. Insbesondere betrifft die vorliegende Erfindung Trägerrahmendichtungen mit einem Trägerrahmen aus Metall und einer an dem Metallträgerrahmen angespritzten Elastomerdichtung. Die vorliegende Erfindung stellt eine besonders leichte Trägerrahmendichtung mit verringertem Gewicht bereit, wie sie beispielsweise in Fahrzeugmotoren als Ölwannen-Dichtung Verwendung findet.

Trägerrahmendichtungen mit stirnseitig angespritztem Dichtprofil werden bevorzugt an Abdichtstellen im Motor- und Getriebebereich verwendet. Abdichtstellen sind zum Beispiel Ölwannendichtungen oder Steuergehäusedichtungen. Trägerrahmen sind meistens aus Aluminium gefertigt, da sich hier Gewichtsvorteile ergeben, es werden jedoch ebenfalls Trägerrahmendichtungen mit Stahlträgerrahmen verwendet. Der Kostenvorteil von Stahl gegenüber Aluminium wird bei Stahlträgerrahmen durch den notwendigen aufwendigeren Korrosionsschutz oft wieder kompensiert. Die Trägerrahmen bestehen im Allgemeinen aus Stahl- oder Aluminiumblech mit einer Dicke von ca. 1 bis 2 mm. Die Trägerrahmen werden üblicherweise vom Coil ausgestanzt.

Die grundlegende Funktionsweise von Trägerrahmehdichtungen besteht in einer echten Funktionstrennung der Bereiche Übertragen der Verschraubungskräfte, Aufnehmen der Druckkräfte und Erzeugen der Dichtfunktion. Hierbei übernimmt der steife Trägerrahmen, der direkt den Kraftfluss zwischen den Flanschen trägt, die Funktion der Abstützung der Schraubenkräfte. Außerdem limitiert der Trägerrahmen den sich beim Verschrauben auf das Trägerblech einstellenden Dichtspalt exakt auf das Maß der Dicke des Trägerrahmens. Die Dichtlippen aus Elastomer-Material können deshalb nicht überbeansprucht werden und arbeiten in einem genau definierten (Arbeits-)Toleranzbereich.

Wie schon vorstehend beschrieben, werden die Trägerrahmenbreiten für solche Dichtungen im Wesentlichen folgendermaßen ausgelegt: Die Dichtlippen aus Elastomer-Material, die in Richtung des Mediums angeordnet sind, erfordern einen bestimmten Platzbedarf. Dann wird der Trägerrahmen konstruiert, der dann im Allgemeinen den Spalt zwischen den Flanschen bis zur Außenkontur der abzudichtenden Bauteile an der Dichtfläche nach außen hin füllt. Der Trägerrahmen kann dabei komplizierteren Dichtungsverläufen und Flanschgeometrien folgen.

Bekannte Trägerrahmen sind mit Öffnungen versehen, um Schrauben an den Befestigungspunkten durch den Trägerrahmen durchzuführen. Außerdem können Öffnungen am Trägerrahmen vorgesehen sein, die dazu dienen, beispielsweise die Trägerrahmen im Spritzwerkzeug zu fixieren oder ein automatisiertes Handhaben der Teile zu ermöglichen. Diese Öffnungen sind im Allgemeinen einzelne oder einige wenige Öffnungen mit kleinen Durchmessern.

Es gibt heute eine große Anzahl von sogenannten Trägerrahmendiehtungen mit angespritztem Dichtprofil. Diese Dichtungen besitzen im Allgemeinen einen metallischen Dichtungsrahmen aus Stahl oder Aluminium. An diesen Trägerahmen wird stirnseitig ein Dichtprofil aus Elastomer-Material angespritzt. Die Geometrie von solchen Trägerrahmen folgt im Allgemeinen mehr oder weniger genau der Flanschgeometrie.

Da bei neun. Motoren sehr viel Wert auf Gewicht gelegt wird, soll eine Trägerrahmendichtung gewichtsoptimiert sein. Eine gewichtsreduzierte Trägerrehmendichtung oftenbart beispielsweise das Dokument DE 3831414A1. Zusätzlich ist es wünschenswert, die Kosten für die Trägerrahmendichtung zu verringern, die Funktionalität der Dichtung soll jedoch nicht beeinträchtigt werden. Mit Funktionalität ist primär die Funktion der technischen Dichtheit angesprochen, die sekundär auch Eigenschaften wie Steifigkeit des Trägerrahmens, die Fertigungsprozesse, die Handhabung und die Montage der Trägerrahmendichtung beeinflussen kann.

Grundsätzlich sind viele Trägerrahmen zweiteilig ausgeführt, um den Materialeinsatz zu minimieren. Hierbei gibt es unterschiedliche Lösungsvarianten, diese nach dem Stanzprozess zusammenzufügen. Es gibt mechanische Klemmlösungen, oder auch Lösungen, in denen beide Trägerrahmensegmente im Elastomerspritzprozess durch Dichtungsmaterial miteinander verbunden werden.

Wie in allen Bereichen der Technik besteht Bedarf, das Leistungsgewicht von Aggregaten aus den unterschiedlichsten Gründen zu verringern.

Bisher konnte sich die Gewichtsoptimierung von Aggregaten hauptsächlich darauf beschränken, das Gewicht der schwersten Teilen zu verringern. Mit zunehmender Optimierung der Motorblöcke wird in Zukunft darauf zurückgegriffen werden müssen, auch kleinere Teile, wie beispielsweise Zylinderköpfe, Ölwannen- oder Zylinderkopfdeckel, in Bezug auf das Gewicht zu optimieren.

Eine andere Aufgabe der Erfindung besteht darin, den Materialeinsatz für Trägerrahmendichtungen zu verringern, was direkt zu einer Einsparung an Material führen kann.

Die Aufpabe wird durch einen Trägerrahmen gemäb Anspruch 1 geläst.

Gemäß eines ersten Aspekt-es der vorliegenden Erfindung wird ein Trägerrahmen für eine Trägerrahmendichtung mit einem Trägerrahmen und einem an dem Trägerrahmen angespritzten Dichtelement (z.B. einer Elastomerdichtung) bereitgestellt. Der Trägerrahmen ist zur Gewichtsverringerung des Trägerrahmens mit Ausnehmungen versehen. Der Trägerrahmen der vorliegenden Erfindung basiert darauf, Ausnehmungen in dem Trägerrahmen anzuordnen, die nicht zur Durchführung von Schrauben, Leitungen, zur Befestigung der Elastomerdichtung (bzw. des Elastomerdichtungselements) und/oder zur Handhabung/Zentrierung bei der Herstellung einer Trägerrahmendichtung dienen. Die Ausnehmungen in dem Trägerrahmen dienen lediglich dazu, das Gewicht des Trägerrahmens zu verringern und damit auch den Materialeinsatz bei der Herstellung des Trägerrahmens zu verringern.

Gemäß eines weiteren Aspekt-es der vorliegenden Erfindung wird eine Trägerrahmendichtung mit einem Trägerrahmen und einem an dem Trägerrahmen angespritzten Dichtelement (z.B. einer Elastomerdichtung) bereitgestellt. Der Trägerrahmen der Trägerrahmendichtung ist dabei erfindungsgemäß mit Ausnehmungen zur Gewichtsverringerung des Trägerrahmens versehen. Die Ausnehmungen werden bevorzugt so in dem Trägerrahmen angeordnet, dass keine wesentlichen Änderungen an dem Trägerrahmen notwendig sind.

In einer beispielhaften Ausführungsform sind die Ausnehmungen entlang der neutralen Faser des Trägerrahmens angeordnet. Insbesondere durch kleine Ausnehmungen, die entlang der neutralen Faser des Trägerrahmens angeordnet sind, kann Gewicht eingespart werden, ohne dass irgendwelche anderen Änderungen an der Trägerrahmendichtung bzw. dem Trägerrahmen vorgenommen werden müssen.

In einer Ausführungsform die nicht Teil der vorliegenden Erfindung ist, sind die Ausnehmungen im Trägerrahmen rund oder ausgerundet. Durch die Verwendung von insbesondere runden Ausnehmungen kann der Trägerrahmen in Form von Lochblechen (wie sie beispielsweise beim Bau von Zeppelinen verwendet wurden) ohne nennenswerte Einbußen der Stabilität leichter gemacht werden. Zudem ist die Auslegung derartiger Ausnehmungen relativ einfach, da es lediglich notwendig ist, eine Reststärke zwischen dem Rand des Trägerrahmens und der Ausnehmung oder beispielsweise zwischen zwei Ausnehmungen zu definieren, die die Funktion des Trägerrahmens sicherstellen.

In einer Ausführungsform der vorliegenden Erfindung bildet der Trägerrahmen durch die Ausnehmungen ein Fachwerk. Fachwerkstrukturen bilden die einfachsten und effektivsten Tragestrukturen im Bereich der Technik, sind einfach zu fertigen, einfach auszulegen und zu optimieren. Insbesondere ist es leicht möglich, in dem vorbestimmten Bereich, den der Trägerrahmen einer Trägerrahmendichtung einnehmen kann, durch die Verwendung von CAD- und Optimierungsprogrammen die ideale Form für die Fachwerkstruktur eines Trägerrahmens zu finden. Es sei angemerkt, dass das Fachwerk insbesondere als zweidimensionales Fachwerk ausgeführt werden kann.

In der vorliegenden Erfindung ist der Trägerrahmen aus Streckmetall ausgeführt. Die Verwendung von Streckmetall ermöglicht die Fertigung von fachwerkartigen Strukturen ohne jeden Verschnitt. Das Streckmetall kann zur leichteren Verarbeitung vor dem Aufbringen der Elastomerschicht gewalzt oder gepresst werden, um einen glatten Trägerrahmen zu erzielen. Es kann sich ebenfalls als vorteilhaft erweisen, das Streckmetall durch Schneiden und Ziehen in der Ebene des Trägerrahmens herzustellen. Es kann bei der Verwendung von Streckmetall insbesondere vorteilhaft sein, ein kaltverfestigendes Material zu verwenden. Es kann sich ebenfalls als vorteilhaft erweisen, den Trägerrahmen aus einem Streifen Streckmetall oder Metallfachwerk zu biegen. Dadurch kann bei einer geeigneten Wahl der Werkstoffe und der zu verwendenden Strukturen auf Verschnitt ganz verzichtet werden (was jedoch zusätzliche Form- und Fügeschritte erforderlich machen kann).

Bevorzugt wird der Trägerrahmen der Trägerrahmendichtung aus geglättetem Streckmetall ausgeführt. Geglättetes Streckmetall lässt sich im Prinzip wie normales Blech verarbeiten. Streckmetall kann durch Walz- oder Pressverfahren geglättet werden.

Bei einer geringen Gewichts- bzw. Flächenreduzierung des Trägerrahmens zwischen beispielsweise 5 und 20 % der Fläche des Trägerrahmens kann (bei geschickter Wahl der Formen der Ausnehmungen oder der Wahl der Positionen der Ausnehmungen) eine Gewichtsreduzierung ohne eine Änderung der äußeren und inneren Form des Trägerrahmens erreicht werden.

In einer Ausfiihrungsform der vorliegenden Erfindung machen die Ausnehmungen mindestens 20% der Fläche des Trägerrahmens aus.

Bei einer geringen Gewichts- bzw. Flächenreduzierung des Trägerrahmens (zwischen beispielsweise 20% und 35% der Fläche des Trägerrahmens) kann bei geschickter Wahl der Formen der Ausnehmungen oder der Wahl der Positionen der Ausnehmungen eine Gewichtsreduzierung ohne eine wesentliche Änderung der äußeren Form bzw. Kontur des Trägerrahmens erreicht werden. Es sollte insbesondere möglich sein, die Außenkontur des Trägerrahmens aufrecht zu erhalten, so dass es nicht notwendig wird, dass der Trägerrahmen über die Außenkante der abzudichtenden Bauteile übersteht.

In einer weiteren Ausführungsform der vorliegenden Erfindung machen die Ausnehmungen mindestens 35% der Fläche des Trägerrahmens aus. Bei einer etwas höheren oder geringeren Gewichts- bzw. Flächenreduzierung des Trägerrahmens (zwischen beispielsweise 35% und 50% der Fläche des Trägerrahmens) kann bei geschickter Wahl der Formen der Ausnehmungen oder der Wahl der Positionen der Ausnehmungen eine Gewichtsreduzierung ohne eine wesentliche Änderung der äußeren Form des Trägerrahmens erreicht werden. Es sollte insbesondere möglich sein, die Außenkontur des Trägerrahmens aufrecht zu erhalten, so dass es nicht notwendig wird, dass der Trägerrahmen über die Außenkante der abzudichtenden Bauteile übersteht.

In einer weiteren Ausführungsform der vorliegenden Erfindung machen die Ausnehmungen mindestens 55% der Fläche des Trägerrahmens aus. Bei einer etwas höheren oder geringeren Gewichts- bzw. Flächenreduzierung des Trägerrahmens (zwischen beispielsweise 50% und 80% der Fläche des Trägerrahmens) kann bei geschickter Wahl der Formen der Ausnehmungen und/oder der Wahl der Positionen der Ausnehmungen eine erhebliche Gewichtsreduzierung ohne eine wesentliche Änderung der äußeren Form des Trägerrahmens erreicht werden. Bei einer derartig großen Änderung der Fläche des Trägerrahmens kann es notwendig werden, ebenfalls den Dichtungsverlauf und/oder die Geometrie der Dichtflächen zu überarbeiten. Es könnte ebenfalls notwendig werden, die Außenkontur des Trägerrahmens über die Außenkante der abzudichtenden Bauteile überstehen zu lassen. Es könnte ebenfalls notwendig werden, die Innenkontur des Trägerrahmens teilweise innerhalb des angespritzten Elastomerteils anzuordnen.

Zur Entlastung der Dichtung kann es ebenfalls vorteilhaft sein, Vorkehrungen zu treffen, die eine Überlastung der Trägerrahmendichtung zu verhindern. Dies kann beispielsweise durch Überdruckventile erreicht werden. Es kann ebenfalls vorgesehen werden, einen Bereich der Dichtlippen, beispielsweise durch verlängerte Dichtlippen. als Überdruckventil auszulegen.

Es kann ebenfalls in Betracht gezogen werden, beispielsweise die Ränder des Trägerrahmens im Bereich der Konturen (auch außerhalb der Bauteilkontur) und/oder der Ausnehmungen umzubördeln oder umzufalten, um den Trägerrahmen in diesen Bereichen zu versteifen.

Die Ausnehmungen können als Durchgangslöcher ausgeführt sein. Die Ausnehmungen können auch lediglich als Vertiefungen ausgeführt sein. Falls die Vertiefungen beispielsweise an beiden Dichtflächen in den Trägerrahmen eingebracht werden, kann dem Trägerrahmen im Wesentlichen der Querschnitt eines Doppel-T-Trägers gegeben werden.

In einer weiteren Ausführungsform ist das Dichtungselement (z.B. eine Elastomerdichtung) stirnseitig an dem Trägerrahmen angespritzt. Durch diesen Aufbau ist es nicht notwendig, die Ober- und Unterseite des Trägerrahmens mit Elastomer zu beschichten. Ein weiterer Vorteil, der sich aus dieser Konstruktion ergibt, besteht darin, dass keine Scherkräfte zwischen beispielsweise dem als Dichtungselement dienenden Elastomerteil und dem Trägerrahmen auftreten. Es kann daher auf besondere Vorkehrungen (wie spezielle Oberflächenbehandlungen, Haltestrukturen oder Durchbrüche im Bereich des Elastomerdichtbereichs) zur Bindung des Elastomerdichtteils an dem Trägerrahmen verzichtet werden.

Im Folgenden wird die Erfindung anhand von einzelnen Ausführungsformen in den Figuren beschrieben:
Figur 1 stellt eine Aufsicht, eine Querschnittsansicht und eine Detailansicht einer herkömmlichen Trägerrahmendichtung dar.
Figur 2 stellt eine Aufsicht und eine Detailansicht einer weiteren Ausführungsform einer Trägerrahmendichtung dar.
Figur 3 stellt eine mit Maßen versehene Ausschnittsansicht der Detailansicht von Figur 2 dar.
Figuren 4 bis 6 stellen Ausschnittsansichten von verschiedenen ,teilweise erfindungsgemäßen, Ausführungsformen von Trägerrahmendichtungen dar.

Im Folgenden werden sowohl in den Figuren als auch in der Beschreibung für gleiche oder ähnliche Elemente die gleichen Bezugszeichen verwendet. Die Figuren können ganz oder teilweise schematisch und nicht maßstabsgetreu sein. Der Trägerrahmen ist in einigen Figuren zur klareren Darstellung ohne ein Dichtelement gezeigt.

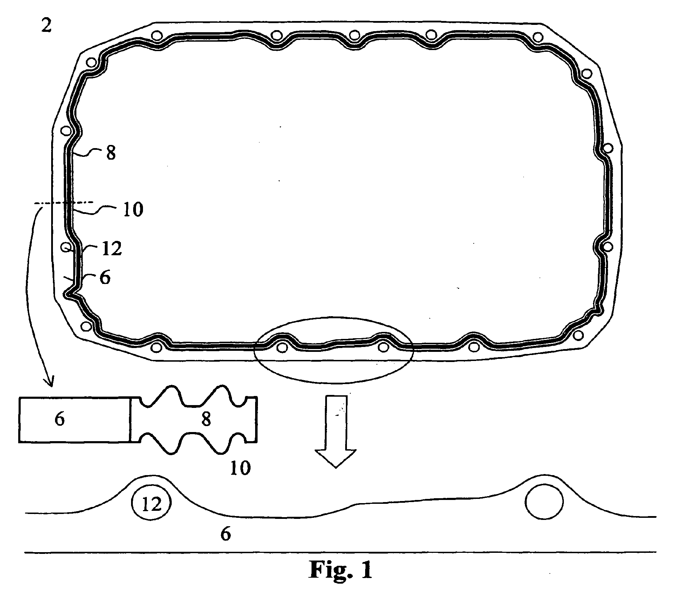

Figur 1 stellt verschiedene Ansichten einer herkömmlichen Trägerrahmendichtung 2 dar. An dem Trägerrahmen 6 der herkömmlichen Trägerrahmendichtung 2 sind Bohrungen 12 für Schrauben angebracht. Durch diese Bohrungen 12 für Schrauben kann die herkömmliche Trägerrahmendichtung 2 zwischen den entsprechenden Dichtflächen zentriert und gehalten werden.

Wie in der Querschnittsansicht der herkömmlichen Trägerrahmendichtung 2 (links Mitte) von Figur 1 erkennbar, ist an dem Trägerrahmen 6 ein Dichtelement 8 aus Elastomer-Material angebracht, das mit Dichtlippen 10 versehen ist. Unten in Figur 1 ist eine Detailansicht des Trägerrahmens 6 der herkömmlichen Trägerrahmendichtung 2 dargestellt. In dieser Ansicht sind insbesondere die Bohrungen 12 für Schrauben dargestellt.

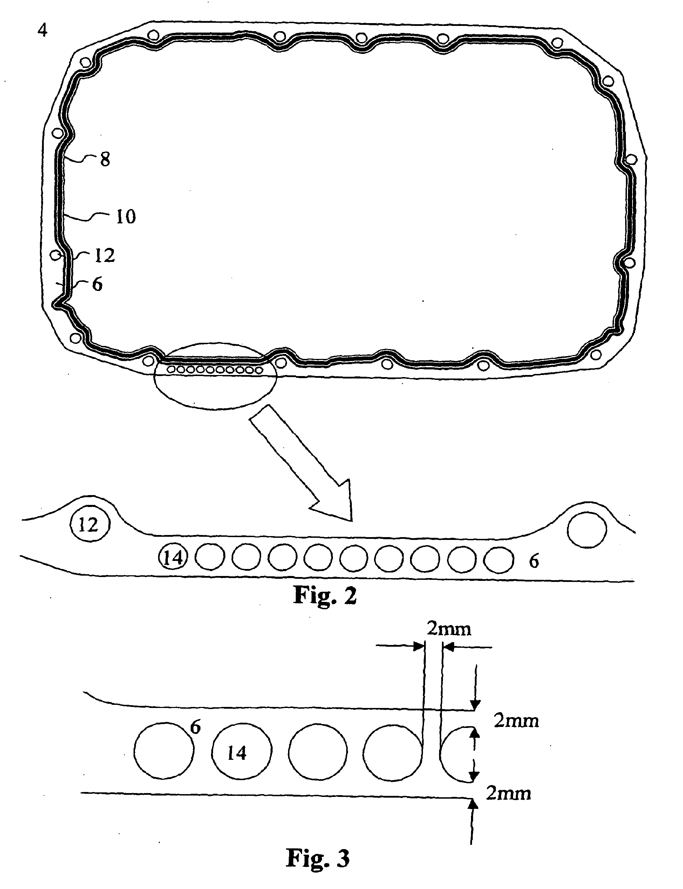

Figur 2 stellt eine Aufsicht und eine Detailansicht einer Ausführungsform einer Trägerrahmendichtung 4 dar. Zur einfacheren Darstellung ist in der Aufsicht von Figur 2 nur ein Teil des Trägerrahmens 6 mit runden Ausnehmungen 14 zur Gewichtsverringerung dargestellt. In der Detailansicht ist die Anordnung der runden Ausnehmungen 14 zur Gewichtsverringerung entlang der neutralen Faser 20 des Trägerrahmes zu erkennen.

Figur 3 stellt eine mit Maßen versehene Ausschnittsansicht der Detailansicht von Figur 2 dar. In Figur 3 sind die Abmessungen der um die runden Ausnehmungen 14 zur Gewichtsverringerung verbleibenden Stege in einer beispielhaften Ausführungsform dargestellt.

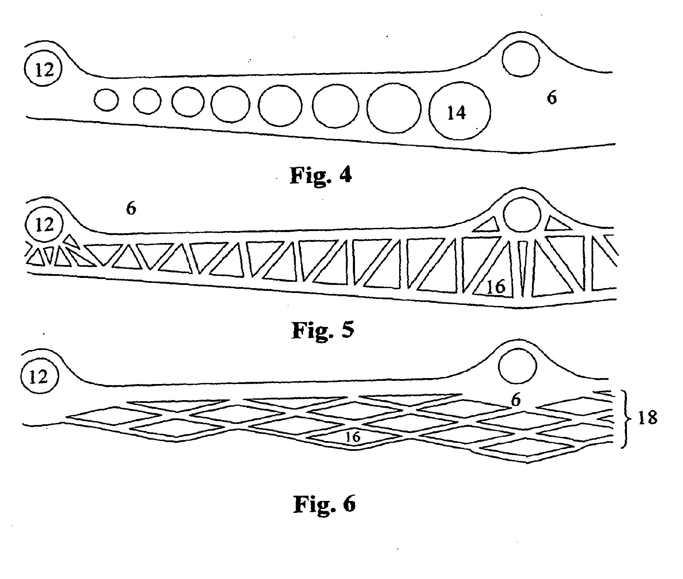

Figur 4 stellt eine Ausschnittsansicht einer Ausführungsform einer Trägerrahmendichtung mit runden Ausnehmungen 14 zur Gewichtsverringerung mit unterschiedlichen Durchmessern dar.

Figur 5 stellt eine Ausschnittsansicht einer Ausführungsform einer Trägerrahmendichtung mit eckigen Ausnehmungen 16 zur Gewichtsverringerung dar. Der Trägerrahmen von Figur 5 bildet ein im Wesentlichen zweidimensionales Fachwerk.

Figur 6 stellt eine Ausschnittsansicht einer Ausführungsform einer erfindungsgemäßen Trägerrahmendichtung mit eckigen Ausnehmungen 16 zur Gewichtsverringerung dar. Die Ausnehmungen sind dabei in einer Streckmetallstruktur 18 gebildet. Die Streckmetallstruktur kann dabei entweder als gepresste oder gewalzte Struktur ausgeführt sein, so dass die Streckmetallstruktur nicht zu einer Dickenerhöhung des Trägerrahmens führt. Eine unverpresste Streckmetallstruktur kann beispielsweise in Verbindung mit umgefalzten Außen- oder Innenkanten verwendet werden, so dass der Trägerrahmen im Querschnitt in etwa die Struktur eines Doppel-T-Trägers hat.

Es ist vorgesehen, den Trägerrahmen nicht in seiner Breite zu beschneiden, sondern im Bereich der flächigen Bereiche Ausstanzungen vorzunehmen. Diese Ausstanzungen sind in einer nicht zur Erfindung gehörenden Ausführungeform bevorzugt rund, können aber auch andere Geometrien aufweisen. Runde Elemente haben den Vorteil, dass diese eine große Materialersparnis unter Beibehaltung einer großen Steifigkeit des Rahmens bewirken. Runde Elemente haben zudem den Vorteil, dass diese als vorgefertigte Einsätze in die Stanzwerkzeuge für den Trägerrahmen integriert werden können. Es können z.B aber auch längliche Ausstanzungen sein, um die Anzahl der Stanzstempel im Stanzwerkzeug geringer zu halten. Beim Einbringen der Elemente werden aus der ursprünglich flächigen Trägerrahmengestalt Öffnungen derart ausgestanzt, dass sich im Randbereich bei einem Trägerrahmen mit z.B. 1,5 mm Dicke eine minimale Wandstärke (Restbreite des Rahmens) von 1,35 bis 2 mm ergibt. Diese minimale Wandstärke soll auf der Innen- und Außenseite erreicht werden. Je nach Auslegung und den erwarteten Druckverhältnissen können auf Zug beanspruchte Stege dünner ausgeführt werden. Je nach Auslegung und den erwarteten Druckverhältnissen können auf Druck beanspruchte Stege dicker ausgeführt werden (Zug und Druck jeweils in der Ebene der Dichtflächen). Die Öffnungsbreite bei runden Ausnehmungen kann sich daher automatisch aus der erforderlichen Breite der Stege ergeben. Löcher mit Durchmessern unter ca. 2 mm sind als nicht sinnvoll zu erachten, da sonst Stanzwerkzeug und/oder Stanzprozess zu aufwendig werden und somit ein vernünftiges Kosten-Nutzen-Verhältnis nicht erreicht werden kann. Löcher mit Durchmessern unter ca. 2 mm können jedoch auch durch Laser-Schneidverfahren hergestellt werden.

Bei einer sich in der Breite erweiternden Geometrie können also z.B. immer größere Lochdurchmesser bei gleichen minimalen Abständen nach außen und hinsichtlich der Öffnungen zueinander gewählt werden.

Für Trägerrahmen mit einer Dicke von 1 mm können die Öffnungen derart ausgestanzt werden, dass sich im Randbereich eine minimale Wandstärke (Restbreite des Rahmens) von 1,0 bis 1,5 mm ergibt.

Die Verhältnisse der Wandstärken können so gewählt werden, dass zu der Dicke des Trägerrahmens ca. 0,5 nun addiert werden, um optimale Verhältnisse für den nachfolgenden Anspritzprozess des Dichtungsbereiches zu gewährleisten. Wird eine bestimmte Mindestbreite bei einer vorgegebenen Dicke unterschritten, werden die Stanzgeometrien auf der Oberseite große Einzüge besitzen, was beim Abdichten im Elastomerspritzgießen beim Anbringen der Dichtungsbereiche zu Prozessproblemen führen kann.

Die vorliegende Erfindung stellt Trägerrahmen für Trägerrahmendichtungen bereit, die bei gleichzeitiger Gewichts- und Kostenersparnis mindestens genauso steif sind wie herkömmliche Trägerrahmen. Durch die vorliegende Erfindung kann der Trägerrahmen eine gute Materialausnutzung, ein niedriges Gewicht und besonders auch eine maximale Steifigkeit erreichen.

Bei der vorliegenden Erfindung sind insbesondre zwei Vorteile zu betrachten, einerseits die Gewichtsersparnis an der Trägerrahmendichtung die jedoch im Vergleich, beispielsweise zu dem Gesamtgewicht eines Motors, eher als klein erscheint, und andererseits der verringerte Materialverbrauch bei der Herstellung, der sich insbesondere bei der Verwertung der ausgeschnittenen Trägerrahmen/Blechteile positiv auswirkt.

### Bezugszeichenliste

herkömmliche Trägerrahmendichtung 2
erfindungsgemäße Trägerrahmendichtung 4
Trägerrahmen 6
Dichtelement 8
Dichtlippen 10
Bohrungen für Schrauben 12
runde Ausnehmungen 14 zur Gewichtsverringerung
eckige Ausnehmungen 16 zur Gewichtsverringerung
Streckmetallstruktur 18

## Patentansprüche

1. Trägerrahmen für eine Trägerrahmendichtung mit einem Trägerrahmen (6) und einem an dem Trägerrahmen (6) angespritzten Dichtelement (8), wobei der Trägerrahmen (6) zur Gewichtsverringerung des Trägerrahmens mit Ausnehmungen (14, 16) versehen ist, **dadurch gekennzeichnet, dass** der Trägerrahmen (6) bzw. die Ausnehmungen (14, 16) in Form von Streckmetall (18) ausgeführt sind.

2. Trägerrahmen gemäß einem der vorstehenden Ansprüche, **dadurch gekennzeichnet, dass** der Trägerrahmen (6) durch die Ausnehmungen (14, 16) ein Fachwerk bildet.

3. Trägerrahmen gemäß einem der vorstehenden Ansprüche, **dadurch gekennzeichnet, dass** das Streckmetall (18) geglättet ist.

4. Trägerrahmen gemäß einem der vorstehenden Ansprüche, **dadurch gekennzeichnet, dass** die Ausnehmungen (14, 16) mindestens 20% der Fläche des Trägerrahmens (6) ausmachen.

5. Trägerrahmen gemäß einem der vorstehenden Ansprüche, **dadurch gekennzeichnet, dass** die Ausnehmungen (14, 16) mindestens 35% der Fläche des Trägerrahmens (6) ausmachen.

6. Trägerrahmen gemäß einem der vorstehenden Ansprüche, **dadurch gekennzeichnet, dass** die Ausnehmungen (14, 16) mindestens 50% der Fläche des Trägerrahmens (6) ausmachen.

7. Trägerrahmen gemäß einem der vorstehenden Ansprüche, **dadurch gekennzeichnet, dass** sich die Ausnehmungen (14, 16) senkrecht zur Dichtfläche erstrecken.

8. Trägerrahmendichtung mit einem Trägerrahmen (6) und einem an dem Trägerrahmen (6) angespritzten Dichtelement (8), wobei der Trägerrahmen (6) ein Trägerrahmen nach einem der Ansprüche 1 bis 7 ist.

9. Trägerrahmendichtung gemäß Anspruch 8, **dadurch gekennzeichnet, dass** das Dichtelement (8) stirnseitig an dem Trägerrahmen (6) angespritzt ist.

## Claims

1. A carrier frame for a carrier frame seal, comprising a carrier frame (6) and a sealing element (8) that is injection molded onto the carrier frame (6), wherein the carrier frame (6) is provided with recesses (14, 16) for reducing the weight of the carrier frame, **characterized in that** the carrier frame (6) and/or the recesses (14, 16) are implemented in the form of expanded metal (18).

2. The carrier frame according to any one of the preceding claims, **characterized in that** the carrier frame (6) forms a framework through the recesses (14, 16).

3. The carrier frame according to any one of the preceding claims, **characterized in that** the expanded metal (18) is smoothened.

4. The carrier frame according to any one of preceding claims, **characterized in that** the recesses (14, 16) account for at least 20% of the area of the carrier frame (6).

5. The carrier frame according to any one of the preceding claims, **characterized in that** the recesses (14, 16) account for at least 35% of the area of the carrier frame (6).

6. The carrier frame according to any one of the preceding claims, **characterized in that** the recesses (14, 16) account for at least 50% of the area of the carrier frame (6).

7. The carrier frame according to any one of the preceding claims, **characterized in that** the recesses (14, 16) extend perpendicular to the sealing surface.

8. The carrier frame seal comprising a carrier frame (6) and a sealing element (8) injection molded onto the carrier frame (6), wherein the carrier frame (6) is a carrier frame according to any one of the claims 1 to 7.

9. The carrier frame seal according to claim 8, **characterized in that** the sealing element (8) is injection molded onto the front end of the carrier frame (6).

## Revendications

1. Cadre de support pour un dispositif d'étanchéité de cadre de support, avec un cadre de support (6) et un élément d'étanchéité (8) moulé par injection sur le cadre de support (6), dans lequel le cadre de support (6) est pourvu d'évidements (14, 16) pour réduire le poids du cadre de support, **caractérisé en ce que** le cadre de support (6) ou les évidements (14, 16) sont conçus sous la forme de métal déployé (18).

2. Cadre de support selon l'une des revendications précédentes, **caractérisé en ce que** le cadre de support (6) forme un treillis avec les évidements (14, 16).

3. Cadre de support selon l'une des revendications précédentes, **caractérisé en ce que** le métal déployé (18) est lissé.

4. Cadre de support selon l'une des revendications précédentes, **caractérisé en ce que** les évidements (14, 16) représentent au moins 20% de la surface du cadre de support (6).

5. Cadre de support selon l'une des revendications précédentes, **caractérisé en ce que** les évidements (14, 16) représentent au moins 35% de la surface du cadre de support (6).

6. Cadre de support selon l'une des revendications précédentes, **caractérisé en ce que** les évidements (14, 16) représentent au moins 50% de la surface du cadre de support (6).

7. Cadre de support selon l'une des revendications précédentes, **caractérisé en ce que** les évidements (14, 16) s'étendent perpendiculairement à la surface d'étanchéité.

8. Dispositif d'étanchéité de cadre de support, avec un cadre de support (6) et un élément d'étanchéité (8) moulé par injection sur le cadre de support (6), dans lequel le cadre de support (6) est un cadre de support selon l'une des revendications 1 à 7.

9. Dispositif d'étanchéité de cadre de support selon la revendication 8, **caractérisé en ce que** l'élément d'étanchéité (8) est moulé par injection sur le côté frontal du cadre de support (6).
